# EUROPEAN PATENT SPECIFICATION

(11) **EP 3 822 104 B1**
(45) Date of publication and mention of the grant of the patent: **12.10.2022**
(21) Application number: 20208064.4
(22) Date of filing: 17.11.2020
(51) Int. Cl.: B60J 7/057, B60J 7/185

(54) **HANDLING SYSTEM FOR A MANUAL RETRACTABLE ROOF**
HANDHABUNGSSYSTEM FÜR EIN MANUELL EINZIEHBARES DACH
SYSTÈME DE MANUTENTION POUR UN TOIT RÉTRACTABLE MANUEL

(30) Priority: 18.11.2019 IT 201900021402
(43) Date of publication of application: 19.05.2021
(73) Proprietor: OPAC S.R.L., 10121 Torino (IT)
(72) Inventor: SACCO, Luca, I-10040 RIVALTA DI TORINO (Torino) (IT); PORRINI, Sergio, I-10090 BRUINO (Torino) (IT)
(74) Representative: Vanzini, Christian

(56) References cited:
- EP-A1- 1 798 085
- EP-A2- 1 110 784
- DE-A1- 3 206 292
- DE-A1-102007 027 259
- DE-A1-102013 102 441
- DE-A1-102015 107 725
- DE-U1- 29 717 325
- DE-U1-202004 005 257
- US-A1- 2018 015 813

## Description

The present invention relates to a handling system for a manually retractable roof, said retractable roof having an end slidable between a closure position, in which said end is adjacent to a front edge of an aperture of the retractable roof, and a plurality of opening positions, the system comprising
a control assembly that includes a base configured to be fixed to said end of the retractable roof, a handle support mounted for rotation to the base, around a first rotation axis orthogonal to the base, and a handle mounted for rotation to the handle support, around a second rotation axis orthogonal to the first rotation axis, said handle being further rotationally integral with the handle support with respect to the first rotation axis,
a latching member rotationally integral with the handle support and configured to couple to a respective strike member arranged on said front edge of the aperture of the retractable roof when the retractable roof is in the closure position, said latching member being controllable for translational motion relative to the handle support by rotation of the handle around the second rotation axis, wherein a retraction of the latching member coupled to the respective strike member allows for tensioning of the retractable roof, and
two locking members configured to be arranged at respective side edges of the retractable roof, each of said locking members being elastically biased against a respective side edge of the aperture of the retractable roof, and being controllable for moving away from the respective side edge of the aperture of the retractable roof by rotation of the handle around the first rotation axis.

The present invention therefore allows, by means of a single handle, to lock and tension the retractable roof when the latter is in the closed position, and to lock the retractable roof in any desired opening position. The invention therefore constitutes a simplification and progress with respect to known systems, in which the locking of the retractable roof in intermediate opening positions is not possible, or it is possible with mechanisms independent from the one dedicated to locking the retractable roof in the closed position and usually in a limited number of predetermined positions. Prior art document EP 1110 784 discloses a sun roof roller blind locking handle that operates about two orthogonal axes.

According to an embodiment, the handle is rotatable relative to the handle support between a rest position in which the handle lies in the handle support, and a working position in which the handle protrudes from the handle support, and wherein in the working position the handle is rotatable relative to the base, along with the handle support, between a first angular position, in which the latching member is arranged parallel to a sliding direction of the retractable roof, and a second angular position, in which the latching member is arranged orthogonal to the sliding direction of the retractable roof.

More specifically, in the base of the control assembly there is formed a guide groove engaged by a slider carried by the latching member, said groove comprising a rectilinear section and a circular arc section extending from an end of the rectilinear section, wherein when said slider is positioned in the rectilinear section of the guide groove, rotation of the handle around the second rotation axis is allowed and rotation of the handle around the first rotation axis is prevented, and when said slider is positioned in the circular arc section of the guide groove, rotation of the handle around the second rotation axis is prevented and rotation of the handle around the first rotation axis is allowed.

According to an embodiment, the locking members are connected to the handle support by respective traction cables guided in such a way to extend in opposite radial directions with respect to the first rotation axis.

More specifically, the traction cables are connected to the handle support by means of respective connecting rods hinged to the handle support. In particular, said connecting rods are hinged to the handle support at hinge points diametrically opposite with respect to the first rotation axis, and wherein in the second angular position each connecting rod is arranged in such a way that the respective hinge point and the respective point of connection with the traction cable are on opposite positions with respect to the first rotation axis.

Features and advantages of the handling system for a retractable roof according to the invention will become apparent from the following detailed description of an embodiment of the invention, made with reference to the accompanying drawings, provided for illustrative and non-limiting purposes only, in which:
- Figures 1 to 3 are perspective views of the handling system according to the invention, respectively in a locked configuration, in which the sliding of the retractable roof is prevented, in an intermediate configuration, in which rotation of the handle around a vertical axis is allowed, and in a free configuration, in which the sliding of the retractable roof is allowed;
- Figures 4 to 6 are enlarged scale views of a control assembly of the handling system, in the conditions of Figures 1 to 3, respectively; and
- Figures 7 and 8 are enlarged scale views of a locking member of the system, in the conditions of Figures 1-2 and in the condition of Figure 3, respectively.

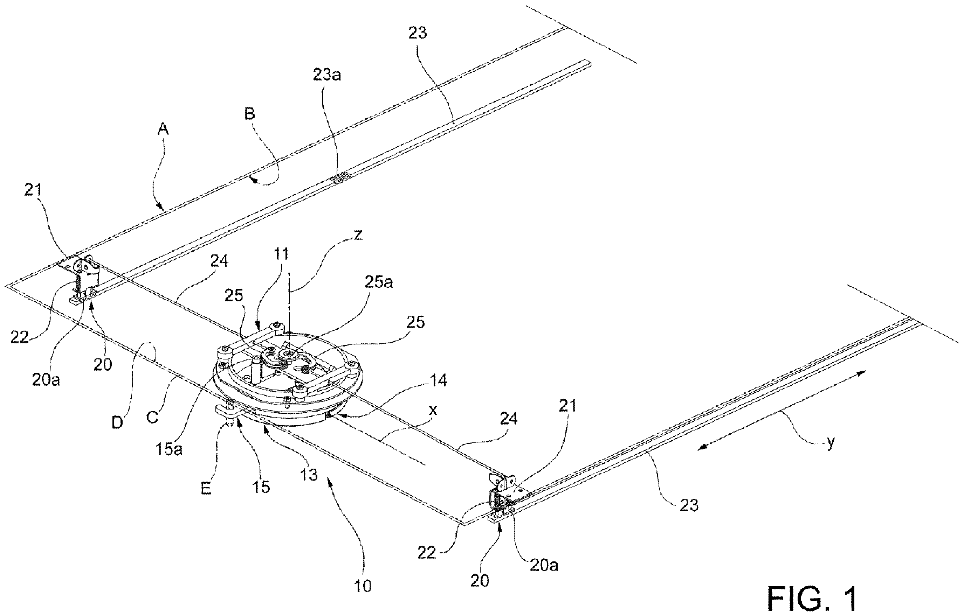

Figures 1-3 show a handling system for a retractable roof, of the type that may be installed at an aperture made on a roof of a vehicle, for example a boat. Figure 1 also shows in a simplified manner a manually retractable roof, indicated by A, and the aperture intended to receive the retractable roof, indicated by B. The retractable roof A may be of any type known in the field, for example folding or sliding, flexible or rigid, and comprises a sliding end C guided alongside guides of the aperture B, not shown. In the closed position shown in Figure 1, the end C of the retractable roof A is adjacent to a front edge D of the aperture B. The end C of the retractable roof A is able to assume a plurality of opening positions, in which such end C is distant from the front edge D of the aperture B. The sliding direction of the retractable roof A is represented by the arrow y in Figure 1.

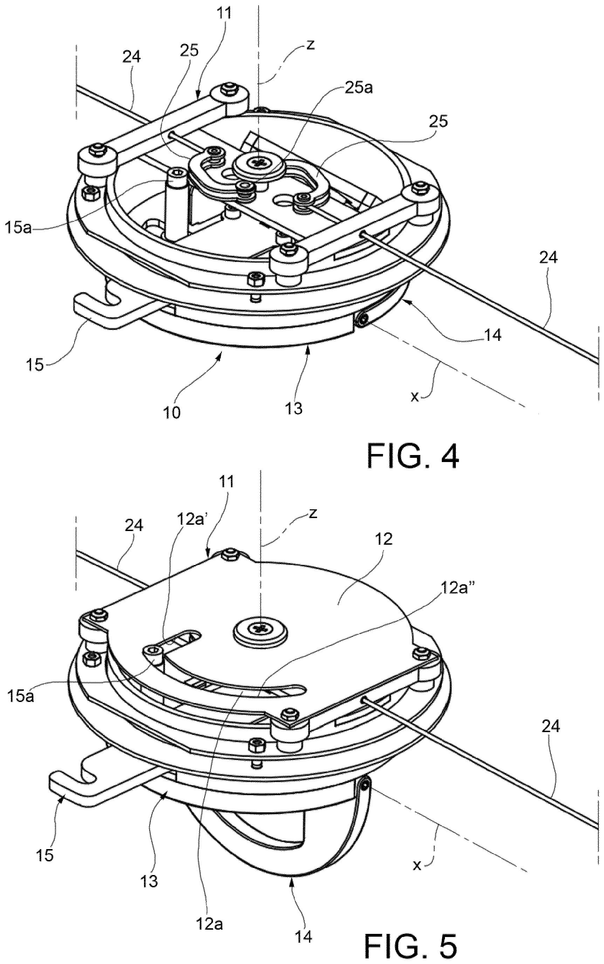

The retractable roof A may be locked in the closed position or in any of the open positions. For this purpose, a handling system is provided which will now be described with reference also to Figures 4-6.

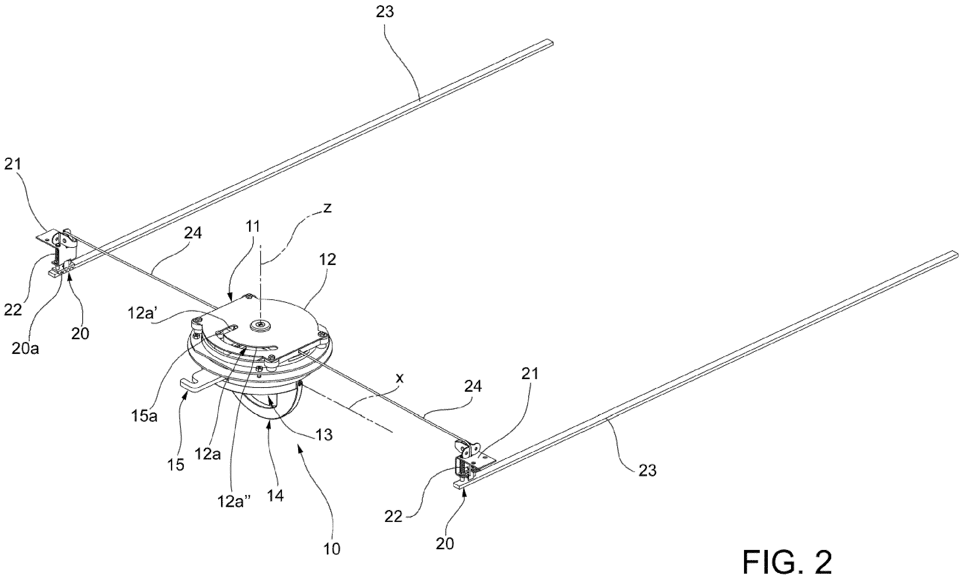

Such handling system comprises a control assembly indicated as a whole with reference numeral 10. The control assembly 10 includes a base or frame 11, configured to be fixed to the end C of the retractable roof A, more precisely in the center and at the lower side thereof. The base 11 comprises a plate 12, shown only in Figures 2 and 5, in which a guide groove 12a is formed, the function of which will be described below. The guide groove 12a comprises a rectilinear section 12a' and a circular arc section 12a" which extends from one end of the rectilinear section 12a'.

The control assembly 10 further includes a handle support 13 mounted for rotation to the base 11, around a first rotation axis z orthogonal to the base 11 and therefore to the plane of the aperture B and of the retractable roof A.

The control assembly 10 further includes a handle or grip 14 mounted for rotation to the handle support 13, around a second rotation axis x orthogonal to the first rotation axis z and to the sliding direction y of the retractable roof A. The handle 14 is also rotationally integral with the handle support 13 relative to the first rotation axis z.

The handling system further comprises a latching member 15 rotationally integral with the handle support 13 and configured to couple to a respective strike member E arranged on the front edge D of the aperture B when the retractable roof A is in the closed position.

The latching member 15 is controllable for translational motion relative to the handle support 13 by rotating the handle 14 around the second rotation axis x. To this end, the latching member 15 is connected to the handle 14 by means of a toggle mechanism (not shown). A retraction of the latching member 15 hooked to the respective strike member E allows tensioning of the retractable roof A.

A slider 15a is carried by the latching member 15 and is therefore movable integrally with it. The slider 15a engages the groove 12a formed in the base 11, more precisely in the plate 12.

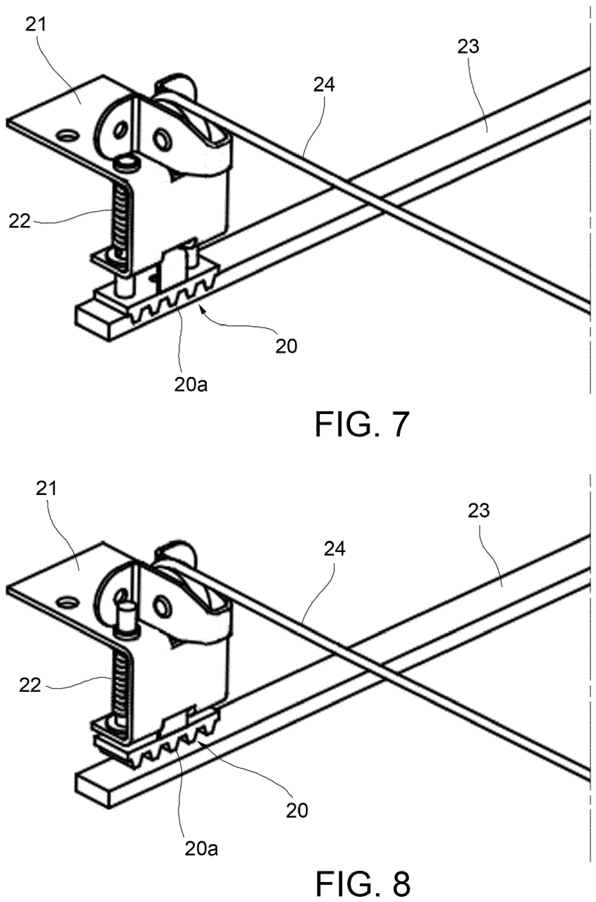

With reference also to Figures 7 and 8, the handling system further comprises two locking members 20 configured to be arranged at respective side edges of the retractable roof A. Each locking member 20 is supported and guided by a respective support 21, which is configured to be fixed to the retractable roof A, at a respective edge of the retractable roof A and on a lower side thereof. On the support 21 there is also arranged an elastic element 22, for example a spring, configured to bias the respective locking member 20 against a respective side edge of the aperture B. More precisely, a toothed belt segment 23 is arranged at each side edge of the aperture B, the toothing 23a whereof (partially shown only in Figure 1) faces the respective locking member 20. On its end, each locking member 20 has a head 20a having a profile mating with the toothing 23a of the respective toothed belt segment 23. This arrangement is not essential for the purposes of the invention, since the locking between the locking member 20 and the respective side edge of the aperture B may be obtained by other types of geometric coupling or, less preferably, by friction.

Each of the locking members 20 may be operated away from the respective side edge of the aperture B by rotating the handle 14 around the first rotation axis z.

To this end, the locking members 20 are connected to the handle support 13 by respective traction cables 24 guided in such a way to extend in opposite radial directions with respect to the first rotation axis z. In particular, the traction cables 24 are arranged in such a way as to extend along a line orthogonal to the sliding direction y of the retractable roof A.

The traction cables 24 are connected to the handle support 13 by respective connecting rods 25 hinged to the handle support 13. In particular, the connecting rods 25 are hinged to the handle support 13 at hinge points 25a diametrically opposite with respect to the first rotation axis z.

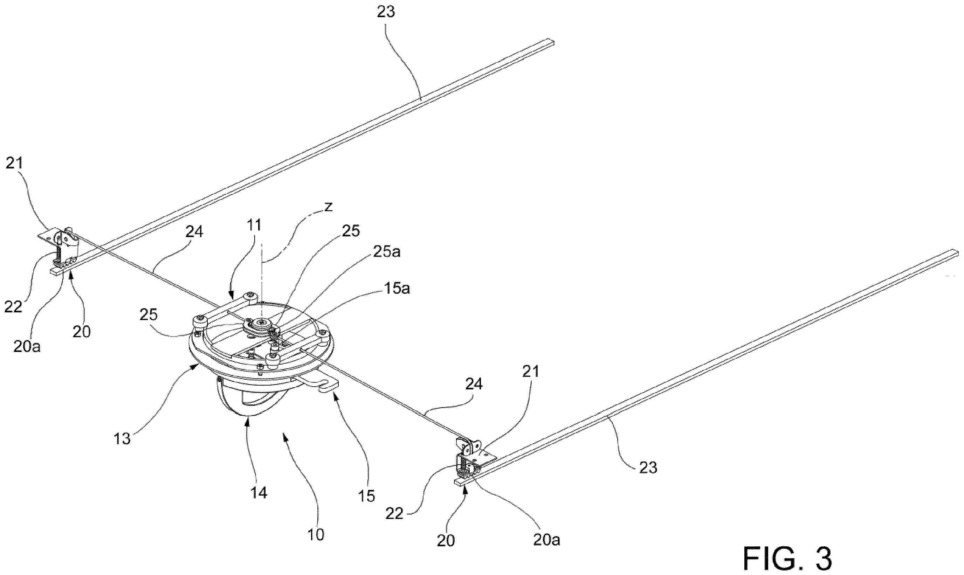

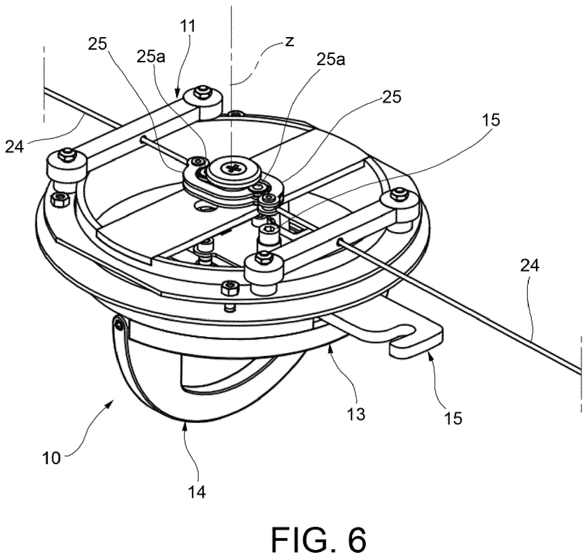

The handle 14 is rotatable relative to the handle support 13 between a rest position (Figures 1 and 4) in which it lies in the handle support 13, and a working position (Figures 2-3 and 5-6) in which it protrudes from the handle support 13. In the working position, the handle 14 is rotatable relative to the base 11, along with the handle support 13, between a first angular position (Figures 2 and 5), in which the latching member 15 is arranged parallel to the sliding direction y of the retractable roof A, and a second angular position (Figures 3 and 6), in which the latching member 15 is arranged orthogonally to the sliding direction y of the retractable roof A and the locking members 20 are moved away from the respective edges of the aperture B.

In the second angular position, each connecting rod 25 is arranged in such a way that the respective hinge point 25a and the respective connection point to the traction cable 24 are in opposite positions with respect to the first rotation axis. This arrangement prevents the elastic elements 22 which act on the latching members 21 from being able to drag the respective cables 24 on their own and therefore cause an undesired rotation of the handle support 13 and of the handle 14 around the first rotation axis x, bringing the latching members back 21 against the toothed belt segment 23.

The position of the slider 15a - integral with the latching member 15 - within the groove 12a of the base 11 determines in use which movements of the handle 14 are allowed and which are instead prevented. When the slider 15a is positioned in the rectilinear section 12a' of the guide groove 12a, the rotation of the handle 14 (and of the handle support 13) around the first rotation axis z is prevented and the rotation of the handle 14 around the second rotation axis x is allowed, and when the slider 15a is positioned in the circular arc section 12a" of the guide groove 12a, the rotation of the handle 14 (and of the handle support 13) around the first rotation axis z is allowed and the rotation of the handle 14 around the second rotation axis x is prevented.

The operation of the handling system is now briefly described.

In the locked position of Figures 1 and 4, the sliding of the handle 14 is inhibited. When the control assembly 10 is approached to the front edge D of the aperture B, there is also the complete closure of the retractable roof A, and therefore with the lock position there is also the tensioning of the retractable roof A against the strike member E. It is not possible to rotate the handle 14 around the first rotation axis z because the slider 15a, integral with the latching member 15, is engaged in the rectilinear section 12a' of the guide groove 12a.

By rotating the handle 14 around the second horizontal axis x (Figures 2 and 5), by means of the toggle mechanism not shown, the latching member 15 is pushed forward, releasing the retractable roof A and moving the slider 15a in the circular section 12a" of the groove 12a. It is then possible to rotate the handle 14.

By rotating the handle 14 along the first vertical axis z (Figures 3 and 6), by means of the connecting rods 25 and the traction cables 24, the locking members 20 are actuated which then move away from the respective toothed belt segments 23. It is then possible to slide the end C of the roof A crosswise along the respective guides and open the roof.

Once a desired opening position has been reached, it is possible to lock the roof A in this position by rotating the handle 14 around the first axis z in the opposite direction with respect to what has been described above. This movement, in fact, loads the locking members 20 allowing the relative elastic elements 22 to bring them back to engagement with the respective toothed belt segments 23. The belt segments 23 are present for the entire length of the stroke of the roof A and therefore allow locking in any position, except in the section immediately adjacent to the closure of the retractable roof to allow the roof to be tensioned.

It is understood that the invention is not limited to the embodiments described and illustrated herein, but is instead susceptible of modifications relating to the shape and arrangement of parts, constructional and operating details, according to the numerous possible variants which will appear suitable to the man skilled in the art and which are to be understood as included in the scope of the invention, as defined by the following claims.

## Claims

1. A handling system for a manually retractable roof (A), said retractable roof having an end (C) slidable between a closure position, in which said end is adjacent to a front edge (D) of an aperture (B) of the retractable roof, and a plurality of opening positions, the system comprising
a control assembly (10) that includes a base (11) configured to be fixed to said end of the retractable roof, a handle support (13) mounted for rotation to the base (11), around a first rotation axis (z) orthogonal to the base (11), and a handle (14) mounted for rotation to the handle support (13), around a second rotation axis (x) orthogonal to the first rotation axis (z), said handle being further rotationally integral with the handle support (13) with respect to the first rotation axis (z), **characterized by**
a latching member (15) rotationally integral with the handle support (13) and configured to couple to a respective strike member (E) arranged on said front edge of the aperture of the retractable roof when the retractable roof (A) is in the closure position, said latching member being controllable for translational motion relative to the handle support (13) by rotation of the handle (14) around the second rotation axis (x), wherein a retraction of the latching member (15) coupled to the respective strike member (E) allows for tensioning of the retractable roof (A), and
two locking members (20) configured to be arranged at respective side edges of the retractable roof (A), each of said locking members being elastically biased against a respective side edge (23) of the aperture (B) of the retractable roof, and being controllable for moving away from the respective side edge (23) of the aperture (B) of the retractable roof by rotation of the handle (14) around the first rotation axis (z).

2. A system according to claim 1, wherein the handle (14) is rotatable relative to the handle support (13) between a rest position in which the handle lies in the handle support (13), and a working position in which the handle protrudes from the handle support (13), and wherein in the working position the handle (14) is rotatable relative to the base (11), along with the handle support (13), between a first angular position, in which the latching member (15) is arranged parallel to a sliding direction (y) of the retractable roof (A), and a second angular position, in which the latching member (15) is arranged orthogonal to the sliding direction (y) of the retractable roof (A).

3. A system according to claim 2, wherein in the base (11) of the control assembly (10) there is formed a guide groove (12a) engaged by a slider (15a) carried by the latching member (15), said groove comprising a rectilinear section (12a') and a circular arc section (12a") extending from an end of the rectilinear section (12a'), wherein when said slider is positioned in the rectilinear section (12a') of the guide groove (12a) rotation of the handle (14) around the first rotation axis (z) is prevented and rotation of the handle (14) around the second rotation axis (x) is allowed, and when said slider is positioned in the circular arc section (12a") of the guide groove (12a) rotation of the handle (14) around the first rotation axis (z) is allowed and rotation of the handle (14) around the second rotation axis (x) is prevented.

4. A system according to any of the preceding claims, wherein the locking members (20) are connected to the handle support (13) by respective traction cables (24) guided in such a way to extend in opposite radial directions with respect to the first rotation axis (z).

5. A system according to claim 4, wherein the traction cables (24) are connected to the handle support (13) by respective connecting rods (25) hinged to the handle support (13).

6. A system according to claims 2 and 5, wherein said connecting rods are hinged to the handle support (13) at hinge points (25a) diametrically opposite with respect to the first rotation axis (z), and wherein in the second angular position each connecting rod (25) is arranged in such a way that the respective hinge point (25a) and the respective point of connection with the traction cable (24) are on opposite positions with respect to the first rotation axis (z).

## Patentansprüche

1. Handhabungssystem für ein manuell einziehbares Dach (A), wobei das einziehbare Dach ein Ende (C) aufweist, das zwischen einer Schließposition, in der das Ende zu einem vorderen Rand (D) einer Öffnung (B) des einziehbaren Dachs benachbart ist, und einer Vielzahl von Öffnungspositionen verschiebbar ist, wobei das System aufweist
eine Steuerbaugruppe (10), die eine Basis (11), die konfiguriert ist, an dem Ende des einziehbaren Dachs befestigt zu sein, einen Griffträger (13), der zur Drehung an der Basis (11) um eine zu der Basis (11) orthogonale erste Drehachse (z) montiert ist, und einen Griff (14) aufweist, der zur Drehung an dem Griffträger (13) um eine zu der ersten Drehachse (z) orthogonale zweite Drehachse (x) montiert ist, wobei der Griff ferner mit dem Griffträger (13) in Bezug auf die erste Drehachse (z) drehfest verbunden ist, **gekennzeichnet durch**
ein Rastelement (15), das mit dem Griffträger (13) drehfest verbunden ist und konfiguriert ist, mit einem entsprechenden Anschlagelement (E) zu koppeln, das an dem vorderen Rand der Öffnung des einziehbaren Dachs angeordnet ist, wenn das einziehbare Dach (A) in der Schließposition ist, wobei das Rastelement zur translatorischen Bewegung relativ zu dem Griffträger (13) durch Drehung des Griffs (14) um die zweite Drehachse (x) steuerbar ist, wobei ein Zurückziehen des Rastelements (15), das mit dem jeweiligen Anschlagelement (E) gekoppelt ist, ein Spannen des einziehbaren Dachs (A) ermöglicht, und
zwei Verriegelungselemente (20), die konfiguriert sind, an jeweiligen Seitenrändern des einziehbaren Dachs (A) angeordnet zu sein, wobei jedes der Verriegelungselemente gegen einen jeweiligen Seitenrand (23) der Öffnung (B) des einziehbaren Dachs elastisch vorgespannt ist und zur Bewegung weg von dem jeweiligen Seitenrand (23) der Öffnung (B) des einziehbaren Dachs durch Drehung des Griffs (14) um die erste Drehachse (z) steuerbar ist.

2. System nach Anspruch 1, wobei der Griff (14) relativ zu dem Griffträger (13) zwischen einer Ruheposition, in welcher der Griff in dem Griffträger (13) liegt, und einer Arbeitsposition, in welcher der Griff von dem Griffträger (13) vorsteht, drehbar ist, und wobei in der Arbeitsposition der Griff (14) relativ zu der Basis (11) zusammen mit dem Griffträger (13) zwischen einer ersten Winkelposition, in der das Rastelement (15) parallel zu einer Verschieberichtung (y) des einziehbaren Dachs (A) angeordnet ist, und einer zweiten Winkelposition, in der das Rastelement (15) orthogonal zu der Verschieberichtung (y) des einziehbaren Dachs (A) angeordnet ist, drehbar ist.

3. System nach Anspruch 2, wobei in der Basis (11) der Steuerbaugruppe (10) eine Führungsnut (12a) ausgebildet ist, in die ein durch das Rastelement (15) getragener Schieber (15a) eingreift, wobei die Nut einen geradlinigen Abschnitt (12a') und einen Kreisbogenabschnitt (12a") aufweist, der sich von einem Ende des geradlinigen Abschnitts (12a') erstreckt, wobei wenn der Schieber in dem geradlinigen Abschnitt (12a') der Führungsnut (12a) positioniert ist, eine Drehung des Griffs (14) um die erste Drehachse (z) verhindert wird und eine Drehung des Griffs (14) um die zweite Drehachse (x) zugelassen wird, und wenn der Schieber in dem Kreisbogenabschnitt (12a") der Führungsnut (12a) positioniert ist, eine Drehung des Griffs (14) um die erste Drehachse (z) zugelassen wird und eine Drehung des Griffs (14) um die zweite Drehachse (x) verhindert wird.

4. System nach einem der vorhergehenden Ansprüche, wobei die Verriegelungselemente (20) durch jeweilige Zugseile (24), die in einer solchen Weise geführt sind, dass sie sich in Bezug auf die erste Drehachse (z) in entgegengesetzten radialen Richtungen erstrecken, mit dem Griffträger (13) verbunden sind.

5. System nach Anspruch 4, wobei die Zugseile (24) durch jeweilige Verbindungsstangen (25), die an dem Griffträger (13) angelenkt sind, mit dem Griffträger (13) verbunden sind.

6. System nach einem der Ansprüche 2 und 5, wobei die Verbindungsstangen an Gelenkpunkten (25a), die sich in Bezug auf die erste Drehachse (z) diametral gegenüberliegen, an dem Griffträger (13) angelenkt sind und wobei in der zweiten Winkelposition jede Verbindungsstange (25) in einer solchen Weise angeordnet ist, dass der jeweilige Gelenkpunkt (25a) und der jeweilige Verbindungspunkt mit dem Zugseil (24) in Bezug auf die erste Drehachse (z) an gegenüberliegenden Positionen liegen.

## Revendications

1. Système de manutention pour un toit rétractable manuellement (A), ledit toit rétractable comportant une extrémité (C) pouvant coulisser entre une position de fermeture, à laquelle ladite extrémité est adjacente à un bord avant (D) d'une ouverture (B) du toit rétractable, et une pluralité de positions d'ouverture, le système comprenant
un ensemble de commande (10) qui inclut une base (11) configurée pour être fixée à ladite extrémité du toit rétractable, un support de poignée (13) monté pour tourner sur la base (11), autour d'un premier axe de rotation (z) orthogonal à la base (11), et une poignée (14) montée pour tourner sur le support de poignée (13), autour d'un second axe de rotation (x) orthogonal au premier axe de rotation (z), ladite poignée étant en outre solidaire en rotation du support de poignée (13) par rapport au premier axe de rotation (z), **caractérisé par**
un élément de loquet (15) solidaire en rotation du support de poignée (13) et configuré pour se coupler à un élément de gâche (E) respectif agencé sur ledit bord avant de l'ouverture du toit rétractable lorsque le toit rétractable (A) est à la position de fermeture, ledit élément de loquet pouvant être commandé pour effectuer un mouvement de translation par rapport au support de poignée (13) par une rotation de la poignée (14) autour du second axe de rotation (x), dans lequel une rétraction de l'élément de loquet (15) couplé à l'élément de gâche (E) respectif permet de tendre le toit rétractable (A), et
deux éléments de verrouillage (20) configurés pour être agencés à des bords latéraux respectifs du toit rétractable (A), chacun desdits éléments de verrouillage étant sollicité élastiquement contre un bord latéral (23) respectif de l'ouverture (B) du toit rétractable, et pouvant être commandé pour s'éloigner du bord latéral (23) respectif de l'ouverture (B) du toit rétractable par une rotation de la poignée (14) autour du premier axe de rotation (z).

2. Système selon la revendication 1, dans lequel la poignée (14) est rotative par rapport au support de poignée (13) entre une position de repos à laquelle la poignée se trouve dans le support de poignée (13) et une position de fonctionnement à laquelle la poignée fait saillie du support de poignée (13), et dans lequel, à la position de fonctionnement, la poignée (14) est rotative par rapport à la base (11), avec le support de poignée (13), entre une première position angulaire à laquelle l'élément de loquet (15) est agencé parallèlement à une direction de coulissement (y) du toit rétractable (A), et une seconde position angulaire à laquelle l'élément de loquet (15) est agencé orthogonalement à la direction de coulissement (y) du toit rétractable (A).

3. Système selon la revendication 2, dans lequel, dans la base (11) de l'ensemble de commande (10), il est formé une rainure de guidage (12a) dans laquelle s'engage une glissière (15a) portée par l'élément de loquet (15), ladite rainure comprenant une section rectiligne (12a') et une section d'arc circulaire (12a") s'étendant depuis une extrémité de la section rectiligne (12a'), dans lequel, lorsque ladite glissière est positionnée dans la section rectiligne (12a') de la rainure de guidage (12a), une rotation de la poignée (14) autour du premier axe de rotation (z) est interdite et une rotation de la poignée (14) autour du second axe de rotation (x) est permise et, lorsque ladite glissière est positionnée dans la section d'arc circulaire (12a") de la rainure de guidage (12a), une rotation de la poignée (14) autour du premier axe de rotation (z) est permise et une rotation de la poignée (14) autour du second axe de rotation (x) est interdite.

4. Système selon l'une quelconque des revendications précédentes, dans lequel les éléments de verrouillage (20) sont reliés au support de poignée (13) par des câbles de traction (24) respectifs guidés de manière à s'étendre dans des directions radiales opposées par rapport au premier axe de rotation (z).

5. Système selon la revendication 4, dans lequel les câbles de traction (24) sont reliés au support de poignée (13) par des bielles (25) respectives articulées sur le support de poignée (13).

6. Système selon les revendications 2 et 5, dans lequel lesdites bielles sont articulées sur le support de poignée (13) à des points d'articulation (25a) diamétralement opposés par rapport au premier axe de rotation (z), et dans lequel, à la seconde position angulaire, chaque bielle (25) est agencée de sorte que le point d'articulation (25a) respectif et le point respectif de liaison avec le câble de traction (24) soient à des positions opposées par rapport au premier axe de rotation (z).
